# EUROPEAN PATENT SPECIFICATION

(11) **EP 4 094 997 B1**
(45) Date of publication and mention of the grant of the patent: **03.07.2024**
(21) Application number: 21175606.9
(22) Date of filing: 25.05.2021
(51) Int. Cl.: B60R 19/18

(54) **INITIATOR FOR A BUMPER ASSEMBLY**
INITIATOR FÜR EINE STOSSFÄNGERANORDNUNG
INITIATEUR POUR ENSEMBLE PARE-CHOCS

(43) Date of publication of application: 30.11.2022
(73) Proprietor: AUTOTECH ENGINEERING S.L., 48340 Amorebieta-Etxano, Bizkaia (ES)
(72) Inventor: Häggström, Tony, 945 34 Rosvik (SE)
(74) Representative: Ehrner & Delmar Patentbyrå AB

(56) References cited:
- EP-A1- 3 670 272
- WO-A1-2015/133949
- JP-A- 2010 042 753

## Description

### TECHNICAL AREA

The present invention relates to an initiator for a bumper assembly to be used on a vehicle.

### BACKGROUND OF INVENTION

Bumper assemblies for vehicles are generally designed with an elongated beam element having a generally U-shape as seen in cross-section. The open side of the beam is often closed by a cover plate. The assembly is then often attached to crash boxes that in turn are attached to, or being a part of, the white body of the vehicle. When the bumper is arranged with a tow bushing for a tow hook, this extends through the cover plate and is usually positioned in the crash box and attached to the crash box. Such a design may reduce the energy absorbing properties of the crash box during an impact.

On the other hand, if the tow bushing is attached to the cover plate and not the crash box, the cover plate needs to be stiffer by reinforcement or be made of a thicker metal plate in order to withstand the forces during towing. This in turn gives the drawback that the bumper and the crash box does not behave as intended regarding energy absorbing properties, often leading to cracks and ruptures in the bumper beam adjacent the crash boxes.

In EP 3 670 272 A2 a bumper assembly is disclosed, in which an elongated bumper beam comprises a first member with a hat-shaped cross section and a second member attached to the first member two, the bumper beam being configured to be attached to two cross members. The second member may include a protruding part, which may contribute to provide a lightweight bumper beam with high strength.

### BRIEF DESCRIPTION OF INVENTION

The aim of the present invention is to remedy the drawbacks with the current solutions of bumper assemblies for vehicles. This aim is solved by a bumper assembly with the features according to the independent patent claim. Preferable embodiments of the bumper assembly form the subject of the dependent patent claims.

According to one aspect of the invention a bumper assembly is provided comprising an elongated bumper beam having a web and two legs forming a generally hat-shaped cross-section, at least two crash boxes attached to said bumper beam, a cover plate section covering at least a part of the open side of the bumper beam, the cover plate section comprising a central part provided with at least one ridge extending outwards and at least one recess adjacent the ridge for providing a deformation initiator. Upon impact, the ridge will be one of the first parts or areas of the bumper assembly that will come in contact with a hitting object. In cooperation with the at least one recess, a deformation will be initiated of the bumper assembly and in particular the bumper beam. Due to the initiator, the cover plate section may be made of a thicker and stiffer plate material and still perform the desired deformation and energy absorption.

Preferably a recess may be adjacent each side of the at least one ridge in order to increase the deformation initiation. Further, the at least one ridge may extend generally in the extension of the bumper beam. According to the invention, the cover plate section is positioned in front of at least one of the at least two crash boxes, wherein the initiator will cooperate with the crash box during impact and deformation.

According to the invention, the bumper assembly comprises at least one tow bushing arranged in one of the at least two crash boxes and extending through said cover plate section and in this regard, the at least one tow bushing may be attached to the cover plate section. As mentioned, because of the initiator, the cover plate section may be made of a stiffer and more load carrying plate material, capable of withstanding towing forces and at the same time will collapse controlled, even with a tow bushing. In order to obtain the best performance when the tow bushing is present during impact, the tow bushing may not be attached to the crash box.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 is a perspective view of a bumper assembly according to the present invention,
Fig. 2 is a detailed view of the bumper assembly of Fig. 1,
Fig. 3 is a cross-sectional view of the plane III of Fig. 2,

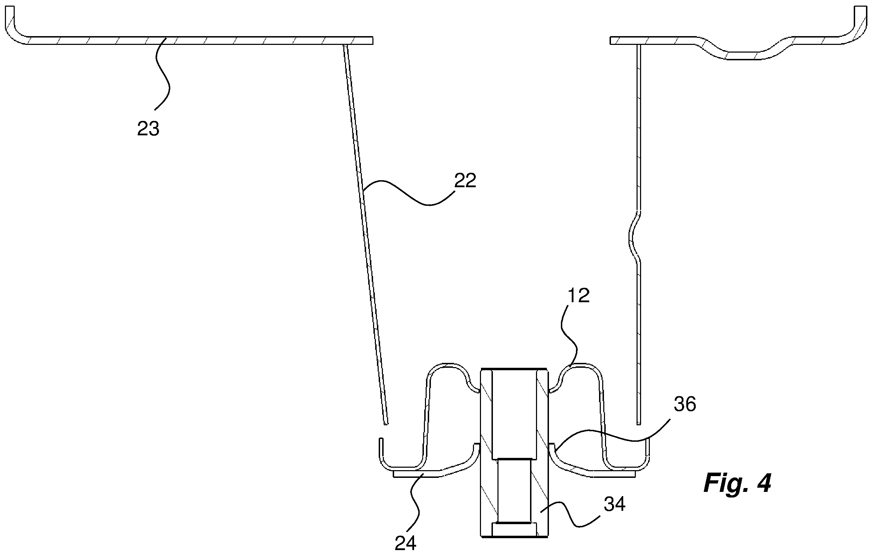

Fig. 4 is a cross-sectional view of the plane IV of Fig. 2, and
Figs. 5-8 show deformation of a bumper assembly provided with the present invention.

### DETAILED DESCRIPTION OF THE INVENTION

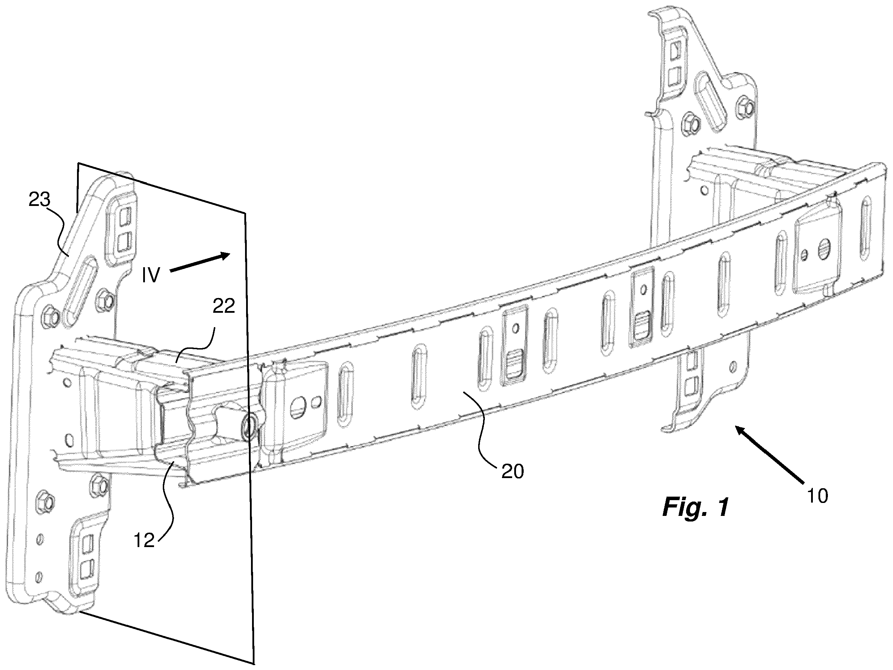

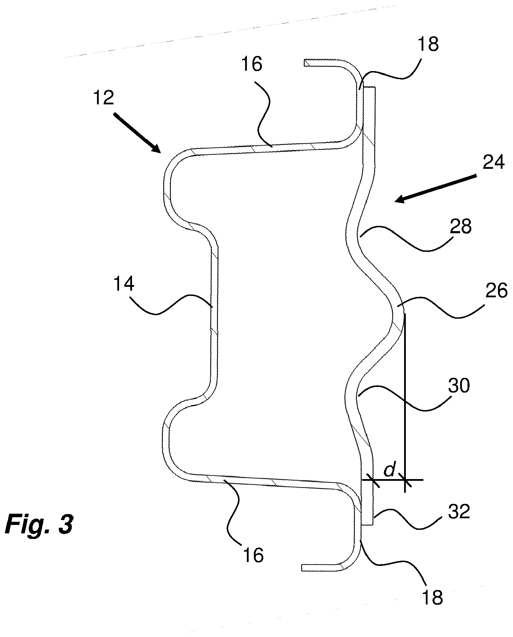

Figure 1 shows a bumper assembly 10 for a vehicle comprising a profiled bumper beam 12. The bumper beam 12 is designed as a generally U-shaped elongated profile having a central web 14 portion and two legs 16, Fig. 3. The legs may further be arranged with outwardly directed flanges 18, providing a hat-shaped cross-section. The open side of the beam 12 is covered with a cover plate 20, preferably attached to the flanges of the legs as seen in Fig. 3. The beam 12 is further attached to two crash boxes 22 that in turn are attached to, or being an integral part of, a white body 23 of a vehicle.

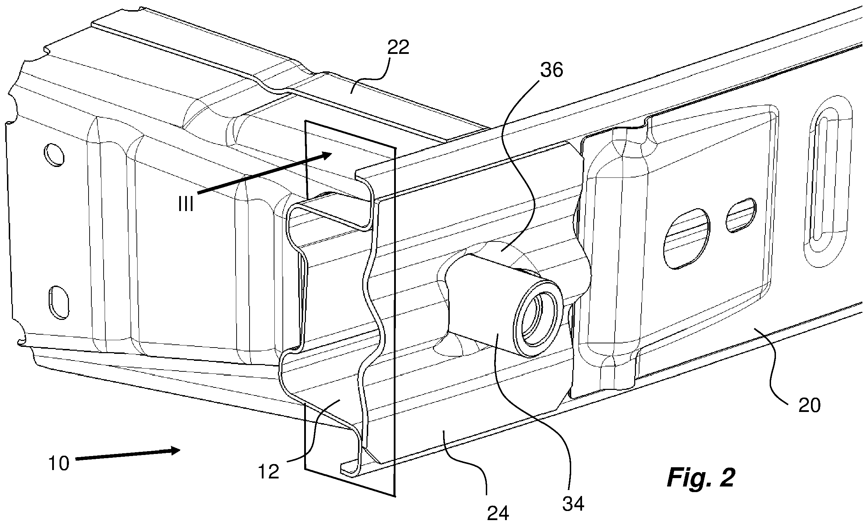

According to the invention, the beam is arranged with a profiled cover plate section 24 that is positioned at least in front of the attachment area of the crash box 22 to the beam 12. The profiled cover plate section 24 is preferably welded to the flanges 18 of the beam with welds 25. The profiled cover plate section 24 is designed with a central protrusion or ridge 26 and recesses 28, 30 on each side of the ridge 26 that will act as initiators as will be described, giving the profiled cover plate section 24 a wavy appearance as seen in a cross-section. As seen in Fig. 3, the ridge 26 extends a distance *d* beyond side sections 32 of the profiled cover plate 24 that are attached to the flanges 18 of the legs 16 of the beam 12. The bumper assembly 10 may be arranged with a tow bushing 34 that passes through a passage in the profiled cover plate section 24 and is welded thereto with welds 35 as seen in Fig. 2. In this regard, an area 36 surrounding the tow bushing 34 is folded towards the crash box. The tow bushing 34 further extends through a passage in the web 14 of the bumper beam and a distance into the crash box 22.

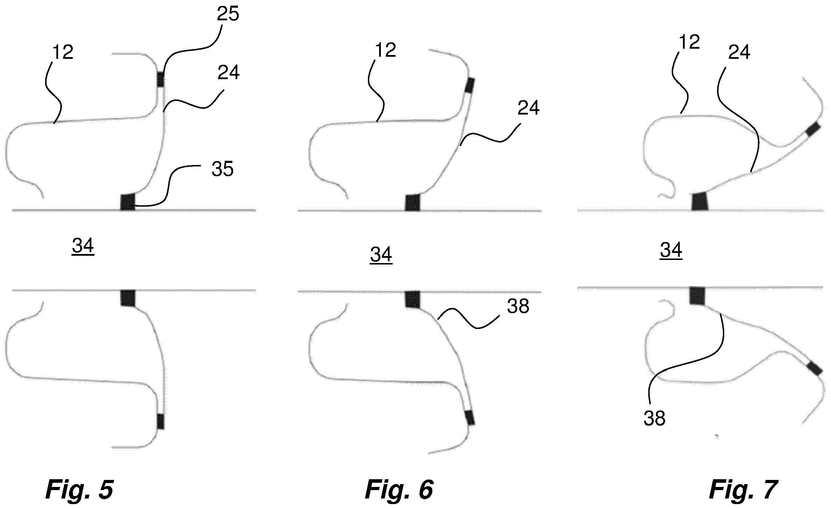

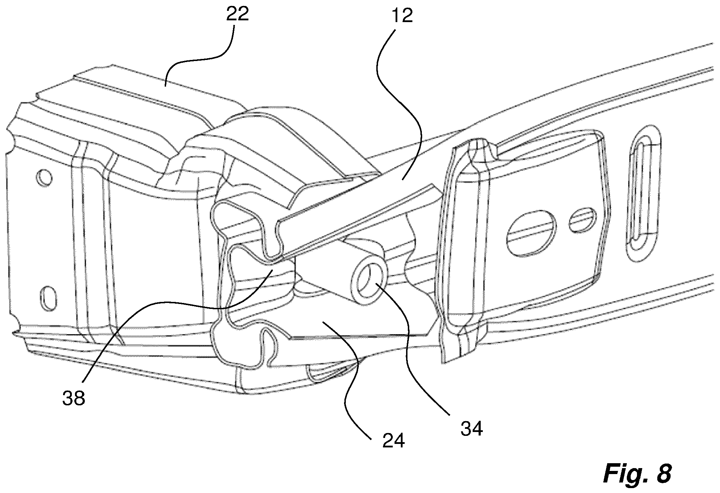

The profiled cover plate section 24 has the following function. When a vehicle provided with a bumper assembly 10 arranged with the profiled cover plate section 24 hits an object, the ridge 26 is the first part of the bumper that contacts the object. This causes a central part 38 of the profiled cover plate section 24 to be pressed towards the crash box 22 and the recesses 28, 30 surrounding the ridge 26 will act as initiators for a buckling of the bumper and thus act as an energy absorbing element. This function is even more pronounced with a tow bushing 34 where the front end of the tow bushing 34 will be the first part to come in contact with the object that is hit. As seen in Figs. 5 - 8 the tow bushing 34 is moved towards the crash box and the recesses of the profiled cover plate section 24 will initiate a buckling of the bumper. As seen in Figs. 7 and 8 the beam 12 will buckle such that the legs 16 will be folded inwards towards the tow bushing 34. At the same time, the crash box 22 will be deformed, as seen in Fig. 8, adding to the energy absorbing function. This design with initiators allows for a stiffer or stronger cover plate, especially when using a tow bushing 34. As seen in Fig. 3, the thickness of the profiled cover plate section 24 is greater than the thickness of the beam 12.

Even though the profiled cover plate section is shown in front of the crash box and the rest of the beam is covered with a non-profiled cover plate, it is to be understood that the profiled cover plate section may extend further along the length of the beam up to the full length of the beam.

It is to be understood that the embodiment described above and shown in the drawings is to be regarded only as a non-limiting example of the invention and that it may be modified in many ways within the scope of the patent claims.

## Claims

1. Bumper assembly (10) comprising an elongated bumper beam (12) having a web (14) and two legs (16) forming a generally hat-shaped cross-section, at least two crash boxes (22) attached to said bumper beam, a cover plate section (24) covering at least a part of the open side of the bumper beam, the cover plate section comprising a central part provided with at least one ridge (26) extending outwards and at least one recess (28) adjacent said ridge for providing a deformation initiator, **characterised in that** said cover plate section is positioned in front of at least one of said at least two crash boxes, the bumper assembly (10) further comprising at least one tow bushing (34) arranged in said at least one crash box and extending through said cover plate section.

2. Bumper assembly according to claim 1, wherein a recess (28, 30) is adjacent each side of the at least one ridge.

3. Bumper assembly according to claim 1 or 2, wherein said at least one ridge extends generally in the extension of the bumper beam.

4. Bumper assembly according to any of the preceding claims, wherein said at least one tow bushing is attached to said cover plate section.

5. Bumper assembly according to claim 4, wherein said at least one tow bushing is not attached to the crash box.

6. Bumper assembly according to any of the preceding claims, wherein the cover plate section is made of a thicker or stiffer sheet metal than the bumper beam.

## Patentansprüche

1. Stoßfängeranordnung (10), die einen länglichen Stoßfängerträger (12) mit einem Steg (14) und zwei Schenkeln (16), die einen allgemein Hut förmigen Querschnitt bilden, mindestens zwei Pralldämpfer (22), die an dem Stoßfängerträger angebracht sind, einen Abdeckplattenbereich (24), der zumindest einen Teil der offenen Seite des Stoßfängerträgers bedeckt, umfasst, wobei der Abdeckplattenbereich einen mittigen Teil umfasst, der mit mindestens einer Erhebung (26), die sich nach außen erstreckt, und mindestens einer Vertiefung (28) neben der Erhebung zur Bereitstellung eines Deformationsinitiators versehen ist, **dadurch gekennzeichnet, dass** der Abdeckplattenbereich vor mindestens einem der mindestens zwei Pralldämpfer positioniert ist, wobei die Stoßfängeranordnung (10) ferner mindestens eine Abschleppbuchse (34) umfasst, die in dem mindestens einen Pralldämpfer angeordnet ist und sich durch den Abdeckplattenbereich hindurch erstreckt.

2. Stoßfängeranordnung nach Anspruch 1, wobei sich eine Vertiefung (28, 30) neben jeder Seite der mindestens einen Erhebung befindet.

3. Stoßfängeranordnung nach Anspruch 1 oder 2, wobei sich die mindestens eine Erhebung allgemein in der Erstreckung des Stoßfängerträgers erstreckt.

4. Stoßfängeranordnung nach einem der vorhergehenden Ansprüche, wobei die mindestens eine Abschleppbuchse an dem Abdeckplattenbereich angebracht ist.

5. Stoßfängeranordnung nach Anspruch 4, wobei die mindestens eine Abschleppbuchse nicht an dem Stoßfängerträger angebracht ist.

6. Stoßfängeranordnung nach einem der vorhergehenden Ansprüche, wobei der Abdeckplattenbereich aus einem dickeren oder steiferen Metallblech als der Stoßfängerträger hergestellt ist.

## Revendications

1. Ensemble formant pare-chocs (10) comprenant une poutre de pare-chocs (12) allongée ayant une âme (14) et deux pattes (16) formant une section transversale généralement en forme de chapeau, au moins deux boîtes-tampons (22) fixées à ladite poutre de pare-chocs, une section formant plaque de recouvrement (24) recouvrant au moins une partie du côté ouvert de la poutre de pare-chocs, la section formant plaque de recouvrement comprenant une partie centrale pourvue d'au moins une arête (26) s'étendant vers l'extérieur et d'au moins un renfoncement (28) adjacent à ladite arête pour fournir un initiateur de déformation, **caractérisé en ce que** ladite section formant plaque de recouvrement est positionnée devant au moins l'une desdites au moins deux boîtes-tampons, l'ensemble formant pare-chocs (10) comprenant en outre au moins une douille de remorquage (34) disposée dans ladite au moins une boîte-tampon et s'étendant à travers ladite section formant plaque de recouvrement.

2. Ensemble formant pare-chocs selon la revendication 1, un renfoncement (28, 30) étant adjacent à chaque côté de l'au moins une arête.

3. Ensemble formant pare-chocs selon la revendication 1 ou 2, ladite au moins une arête s'étendant généralement dans le prolongement de la poutre de pare-chocs.

4. Ensemble formant pare-chocs selon l'une quelconque des revendications précédentes, ladite au moins une douille de remorquage étant fixée à ladite section formant plaque de recouvrement.

5. Ensemble formant pare-chocs selon la revendication 4, ladite au moins une douille de remorquage n'étant pas fixée à la boîte-tampon.

6. Ensemble formant pare-chocs selon l'une quelconque des revendications précédentes, la section formant plaque de recouvrement étant composée d'une feuille métallique plus épaisse ou plus rigide que la poutre de pare-chocs.
